# DEMANDE DE BREVET EUROPEEN

(11) **EP 0 803 287 A1**
(43) Date de publication de la demande: **29.10.1997**
(21) Numéro de dépôt: 97430010.5
(22) Date de dépôt: 09.04.1997
(51) Int. Cl.: B01J 19/28, B01J 19/00, B01J 19/24, F28G 7/00

(54) **Procédé et dispositif pour réduire ou éviter un dépôt de particules solides sur la paroi interne d'un conduit**

(30) Priorité: 24.04.1996 FR 9605517
(71) Demandeur: NAPHTACHIMIE S.A., F-92400 Courbevoie (FR)
(72) Inventeur: Bellet, Serge, 13220 Chateauneuf-Les-Martigues (FR); Louradour, Guy, 93100 Montreuil (FR); Paterson, Rebecca, Linlinthtow EH 49 6EJ (GB)
(74) Mandataire: Somnier, Jean-Louis

(57) **Abrégé**

Le secteur technique de l'invention est le domaine de la fabrication de dispositifs de traitement thermique, tels que des fours de craquage thermique de produits chimiques, d'hydrocarbures notamment.

La présente invention a pour objet un procédé de traitement thermique d'un ou plusieurs fluides s'écoulant dans un conduit (9) qui comporte au moins un tronçon rectiligne de tube dirigé selon un axe longitudinal et éventuellement terminé par au moins un coude, et qui est disposé en partie au moins dans une enceinte thermique, pour réduire ou éviter un dépôt de particules solides sur la paroi interne dudit conduit, procédé dans lequel on provoque une vibration dudit conduit à l'aide d'un vibrateur (27) mécanique qui est disposé à l'extérieur de l'enceinte thermique (5), et qui est relié au conduit par un moyen de liaison mécanique ; ledit vibrateur selon l'invention exerce sur ledit moyen de liaison mécanique un effort selon un axe sensiblement transversal à l'axe longitudinal dudit tronçon rectiligne, et ledit moyen de liaison mécanique est fixé au voisinage d'une extrémité dudit tronçon rectiligne ou audit coude.

## Description

La présente invention a pour objet un procédé et dispositif de traitement thermique de matières ou produits fluides (liquides et/ou gazeux) s'écoulant dans un corps creux délimitant un conduit.

Le secteur technique de l'invention est le domaine de la fabrication de dispositifs de traitement thermique, tels que des fours de craquage thermique de produits chimiques, d'hydrocarbures notamment.

La présente invention a pour objectif de proposer un procédé et un dispositif de traitement thermique de produits circulant dans un tube ou conduit d'un corps creux disposé dans une enceinte thermique (par exemple dans un four comportant une zone de radiation équipée de brûleurs), qui permettent de réduire ou d'éviter des dépôts de particules solides sur la paroi interne du tube ou conduit dans lequel circule le fluide, tels que des dépôts de coke dans le cas du craquage thermique d'hydrocarbures.

On connaît par la demande internationale N° WO 92/11931 (NAPHTACHIMIE et Al), un procédé de fabrication de produits chimiques, dans lequel on fait circuler un ou plusieurs réactifs à l'intérieur d'un tube disposé dans une zone de radiation d'un four, et dans lequel une partie du tube est soumise à une vibration afin de limiter les dépôts de sous-produits de la réaction sur la paroi interne du tube ; ce document propose de provoquer une vibration transversale du tube à une fréquence comprise entre 50 et 2000 hertz, par une source de vibrations mécaniques, qui est disposée à l'intérieur ou à l'extérieur de la zone de radiation du four, et qui est reliée au tube par l'intermédiaire d'une liaison mécanique.

Ce document décrit également un four, tel qu'un four de vapocraquage, comportant une enceinte thermique de radiation, munie de brûleurs, à l'intérieur de laquelle est disposé un tube de craquage en forme de serpentin, constitué d'une succession de sections droites reliées entre elles par des coudes ; le four est muni d'un moyen d'excitation susceptible de générer une vibration d'au moins une partie du tube qui peut être constitué par un générateur de vibrations mécaniques, relié au tube par une liaison mécanique.

La présente invention a pour objet de proposer un procédé et un dispositif de traitement thermique d'un ou plusieurs fluides s'écoulant dans un conduit disposé dans une enceinte thermique (telle qu'une enceinte de radiation d'un four), qui soient améliorés.

Un objectif poursuivi par l'invention est de proposer un procédé et un dispositif de mise en vibration effective d'un tube (ou conduit) disposé dans une enceinte thermique et dans lequel s'écoule un fluide, qui soient compatibles avec des contraintes thermiques pouvant être élevées dues à des températures notamment élevées régnant dans l'enceinte thermique, et qui soient susceptibles d'être mis en oeuvre industriellement et pour ce faire, puissent être obtenus à un coût réduit tout en étant dotés d'une robustesse ou fiabilité suffisante, compte tenu notamment du caractère continu des procédés de traitement thermique qui nécessitent généralement une durée de vie élevée des matériels utilisés.

L'invention concerne notamment un procédé de traitement thermique d'un ou plusieurs fluides s'écoulant dans un conduit qui comporte au moins un tronçon rectiligne de tube dirigé selon un axe longitudinal et éventuellement terminé par un coude (ou tronçon curviligne ou portion courbe de tube), et qui est disposé en partie au moins dans une enceinte thermique, procédé dans lequel on applique audit conduit une vibration à l'aide d'un vibrateur mécanique qui est disposé à l'extérieur de l'enceinte thermique et qui est relié au conduit (et/ou au tronçon rectiligne de tube) par un moyen de liaison mécanique, pour réduire ou éviter un dépôt de particules solides sur la paroi interne dudit conduit ; conformément à l'invention, le moyen de liaison mécanique est fixé au coude et/ou au voisinage d'une extrémité dudit tronçon rectiligne et les vibrations d'une portion rectiligne du conduit sont obtenues par l'effort exercé par le vibrateur sur le moyen de liaison mécanique, selon un axe (c'est-à-dire une direction) sensiblement transversal, par référence à l'axe longitudinal du tronçon rectiligne de tube (formant une portion rectiligne du conduit).

Il a été constaté que, de façon surprenante, il est possible d'obtenir une vibration suffisamment efficace, de préférence transversale (c'est-à-dire de flexion du tronçon rectiligne de tube) pour limiter les dépôts sur la paroi interne d'un tronçon rectiligne du conduit, en appliquant les vibrations (qui sont générées par le vibrateur et transmises au conduit par le moyen de liaison mécanique) à l'extrémité de ce tronçon rectiligne, alors que cette extrémité correspond normalement à un noeud de vibration, pour ce qui concerne notamment les modes de vibration transversale de ce tronçon, et que par conséquent, il paraît défavorable d'exciter le tronçon rectiligne au voisinage de son extrémité.

De préférence, le vibrateur exerce un effort linéaire ou axial, c'est-à-dire dirigé selon un axe (ou direction) dit principal, qui est invariable dans le temps ; à cet effet, le vibrateur peut comporter un noyau ou masselotte, montée mobile en translation linéaire (selon ledit axe principal) sur deux paliers alignés, et mue par l'action d'un champ électromagnétique périodique et alternatif ; ce type préféré de vibrateur électromagnétique peut être choisi parmi ceux proposés par la Société BINDER MAGNETE GMBH (Mönchweilerstrasse 1, Postfach 1220, D.7730 Villingen-Schwenningen, Allemagne).

Conformément à un aspect de l'invention, l'axe principal selon lequel l'effort est exercé, peut être incliné par rapport à l'axe longitudinal du tronçon rectiligne à faire vibrer, d'un angle supérieur à 45° et inférieur à 135°, de préférence compris entre 60° et 120°, notamment voisin de 90°.

Ledit procédé de traitement thermique peut mettre en oeuvre des moyens de chauffage et/ou de refroidissement disposés dans l'enceinte thermique, et comprend par conséquent le chauffage et/ou le refroidissement du ou des fluides s'écoulant dans le conduit au travers de l'enceinte thermique.

Le vibrateur exerce sur le moyen de liaison mécanique, un effort (ou force) variable dans le temps, de préférence périodique et alternatif, pour provoquer un mouvement (ou déplacement) du moyen de liaison (c'est-à-dire de la structure de transmission des vibrations) et du tronçon rectiligne de tube, variable dans le temps et de valeur moyenne nulle.

La (ou les) zone(s) de fixation du moyen de liaison mécanique au conduit est (sont) située(s) au voisinage d'une extrémité dudit tronçon rectiligne de tube ou éventuellement à un coude fixé à ladite extrémité, laquelle zone de fixation s'étend à l'intérieur ou à l'extérieur de ladite enceinte ; de préférence, ledit moyen de liaison est fixé audit conduit à une distance de ladite extrémité qui est telle que le rapport de ladite distance à la longueur dudit tronçon rectiligne de tube est inférieur à 0,25, par exemple de 0,01 à 0,2, de préférence inférieur ou égal à 0,1, par exemple de 0,02 à 0,1, plus particulièrement voisin de 0,05 à 0,04.

Pour des conduits comportant un tronçon rectiligne (ou portion droite) dont la longueur est de l'ordre par exemple de 5 à 25 mètres et comportant un coude fixé à l'extrémité de ladite portion droite, ladite zone de fixation est située, soit dans une partie du coude, soit dans une zone de ladite portion droite située à une distance de ladite extrémité qui est inférieure ou égale à 2 mètres, par exemple de 0,01 à 2 mètres, de préférence inférieure ou égale à 1 mètre, par exemple de 0,05 à 1 mètre.

L'écoulement du ou des fluides dans le conduit peut être réalisé avant ou après, ou de préférence pendant la mise en vibration du conduit ; ledit (ou lesdits) fluide(s) peut (peuvent) être un (des) réactif(s) chimique(s) soumis à une réaction chimique dans ledit conduit ; dans ce cas, l'enceinte thermique peut être un four ou une chambre réactionnelle ou même un échangeur thermique dans lequel se déroule une réaction chimique.

Selon des modes préférentiels de réalisation du procédé selon l'invention :
- ladite vibration est exercée au voisinage d'un coude dudit conduit conformé en un serpentin comportant une succession de tronçons rectilignes de tubes s'étendant selon des axes longitudinaux verticaux ou horizontaux, et de tronçons curvilignes ou coudes reliant lesdits tronçons rectilignes entre eux ;
- lesdites vibrations sont appliquées en exerçant un effort (ou force) selon une direction sensiblement radiale par référence aux axes longitudinaux desdits tronçons rectilignes de tubes et ledit moyen de liaison mécanique est fixé au voisinage d'un moyen de support ou de guidage mécanique dudit conduit ;
- ladite liaison mécanique par laquelle lesdites vibrations sont transmises et appliquées audit conduit, est fixée ou liée rigidement et de manière inamovible audit conduit, par exemple audit coude du conduit conformé en serpentin ;
- le vibrateur électromagnétique est alimenté par une source d'énergie électrique à fréquence variable (ou convertisseur à fréquence variable) inférieure ou égale à 100 hertz, par exemple inférieure ou égale à 50 ou 60 hertz ;
- on utilise un vibrateur qui est supporté par (ou suspendu à) ladite liaison mécanique.
- ledit vibrateur exerce un effort (linéaire) périodique dont la fréquence est sensiblement égale (à plus ou moins 15 % près, de préférence à plus ou moins 5 % près) à une fréquence propre correspondant à un mode de vibration transversale dudit tronçon rectiligne.
- on applique des vibrations audit conduit à une fréquence inférieure à 1000 hertz, de préférence comprise entre 10 et 100 hertz, par exemple comprise entre 20 et 60 hertz.

La solution au problème posé consiste également à proposer un dispositif ou appareil de traitement thermique d'un ou plusieurs fluides qui comporte :
- une enceinte thermique,
- un conduit dans lequel ledit ou lesdits fluides s'écoulent, qui comporte au moins un tronçon rectiligne de tube dirigé selon un axe longitudinal et éventuellement terminé par au moins un coude (ou tronçon curviligne de tube) et qui s'étend en partie au moins à l'intérieur de ladite enceinte,
- un vibrateur mécanique disposé à l'extérieur de l'enceinte thermique,
- un moyen de liaison (ou lien ou adaptateur) mécanique reliant ledit conduit audit vibrateur, qui est fixé audit conduit dans au moins une zone de fixation qui s'étend au voisinage d'une extrémité dudit tronçon rectiligne ou audit coude, et dans lequel l'axe selon lequel ledit vibrateur exerce son effort sur ledit moyen de liaison mécanique est disposé sensiblement transversalement à l'axe longitudinal dudit tronçon rectiligne de tube.

Selon des modes préférentiels de réalisation du dispositif selon l'invention :
- ledit vibrateur est fixé de préférence rigidement audit moyen de liaison et de sorte que son axe principal d'application d'effort soit disposé sensiblement radialement par référence à l'axe longitudinal de la liaison mécanique.
- au moins un moyen de support ou de guidage mécanique dudit conduit est disposé au voisinage de ladite extrémité du tronçon rectiligne du tube ou audit coude, d'une façon distincte dudit moyen de liaison mécanique ;
- ledit moyen de liaison mécanique est lié ou fixé rigidement et de manière inamovible audit conduit et est fixé par une liaison souple (ou suspension telle qu'un ressort) à un élément fixe disposé à l'extérieur de l'enceinte ; cette liaison souple permet de soustraire (ou compenser) une partie au moins de la masse du moyen de liaison mécanique pour éviter d'engendrer des contraintes mécaniques supplémentaires dans le conduit ; en effet, la fonction du moyen de liaison mécanique est de transmettre intégralement les vibrations du vibrateur au conduit sans modifier sensiblement la fréquence appliquée par le vibrateur (par une fréquence propre du moyen de liaison mécanique) ;
- une partie au moins dudit moyen de liaison mécanique est soudée audit conduit, par exemple au voisinage d'une extrémité d'un tronçon rectiligne de tube de celui-ci, ou bien est moulée avec une partie dudit conduit telle qu'un coude ;
- ledit moyen de liaison mécanique (par lequel sont transmises les vibrations) comporte au moins deux et au plus six (par exemple trois ou quatre) éléments allongés (tels que pattes, ailes ou nervures) qui sont fixés (de préférence soudés) à un tronçon rectiligne de tube faisant partie du conduit, au voisinage d'une extrémité dudit tronçon de tube ou audit coude ; les éléments allongés peuvent être régulièrement ou symétriquement répartis autour de l'axe longitudinal du tronçon rectiligne de tube ;
- ledit moyen de liaison mécanique comporte en outre une partie creuse (tubulaire) et droite (rectiligne) ;
- ledit moyen de liaison mécanique comporte un ensemble de pièces soudées entre elles, dont au moins deux pièces sont constituées de matériaux ou alliages (d'acier par exemple) différents ;
- ledit vibrateur mécanique est un vibrateur électromagnétique alimenté par un variateur de fréquence et de tension (pour modifier respectivement la fréquence et l'amplitude de vibration) ;
- ledit vibrateur mécanique est fixé (rigidement) audit moyen de liaison mécanique par des moyens de fixation et d'orientation qui permettent une orientation de l'axe d'application de la vibration et/ou de l'effort alternatif généré par le vibrateur mécanique, autour (dans différentes positions sensiblement radiales) d'un axe parallèle à un tronçon rectiligne de tube dudit conduit ;
- ledit moyen de liaison mécanique est essentiellement constitué par un tube ou une tige s'étendant au travers d'un orifice prévu dans une paroi faisant partie des moyens délimitant l'enceinte thermique, lequel moyen de liaison est fixé au voisinage de l'extrémité du tronçon rectiligne de tube ou de préférence à un coude disposé à ladite extrémité, et ledit tronçon rectiligne de tube s'étend sensiblement horizontalement ;
- ledit moyen de liaison mécanique comporte un tronçon de tube creux délimitant un espace tubulaire à l'intérieur duquel s'étend un tube ou tige faisant partie des moyens de suspension ou d'attache du conduit à un élément fixe disposé à l'extérieur de l'enceinte, lequel tronçon de tube s'étend au travers d'un orifice prévu dans une paroi de l'enceinte thermique et ledit tronçon rectiligne de tube s'étend sensiblement verticalement ;
- la première fréquence propre (c'est-à-dire la fréquence la plus basse) correspondant au premier mode propre de déformation naturelle de la liaison mécanique (ou connecteur) est supérieure (de préférence d'au moins 20 ou 30 %) à la première fréquence propre de déformation (transversale) de la portion rectiligne du conduit ; à titre d'exemple, pour permettre une excitation du conduit à une fréquence propre de celui-ci qui est voisine de 40 Hz, on vérifiera qu'aucune fréquence propre de la liaison mécanique ne se situe en-dessous de 50 Hz, de préférence en-dessous de 60 ou 70 Hz et on règle la fréquence des vibrations générées par le vibrateur à une valeur voisine de 35 à 45 Hz ;
- le rapport de la masse dudit moyen de liaison mécanique (entre le vibrateur et le conduit) à la masse dudit conduit est inférieur à 0,1, de préférence inférieur ou égal à 0,05 ;
- la plus grande dimension (ou longueur) dudit moyen de liaison est inférieure ou égale à deux mètres, par exemple voisine de 1 mètre à 1,5 mètre.

La solution au problème posé consiste également à proposer un dispositif pour appliquer des vibrations produites par un vibrateur mécanique à un conduit dont au moins une partie s'étend à l'intérieur d'une enceinte thermique et qui comporte au moins un tronçon rectiligne de tube dirigé selon un axe longitudinal et éventuellement terminé par au moins un coude, dispositif qui comporte un moyen de liaison mécanique reliant le vibrateur au conduit et ayant une structure métallique (rigide) de transmission des vibrations, qui est de forme allongée, qui comporte :
- un tronçon tubulaire, de préférence creux et de section cylindrique, ou bien plusieurs tronçons tubulaires assemblés de manière rigide (et de préférence inamovible, de préférence par soudure),
- une interface (ou moyen) de fixation mécanique rigide (de préférence amovible ou démontable, par exemple par vis ou boulons) dudit vibrateur sur ladite structure, disposée par exemple à une première des extrémités de la structure métallique,
- une interface (ou moyen) de fixation mécanique rigide (de préférence inamovible, par exemple par soudure) de ladite structure sur ledit conduit, disposée par exemple à une deuxième extrémité de la structure métallique, de préférence au coude ou au voisinage d'une extrémité dudit tronçon rectiligne

Les procédés et dispositifs selon l'invention conviennent pour le vapocraquage d'hydrocarbures tels que le naphta, pour produire des oléfines, ou pour le craquage du 1, 2-dichloroéthane pour produire du chlorure de vinyle.

De façon générale, l'invention s'applique aux procédés et dispositifs dans lesquels des fluides sont susceptibles de provoquer des dépôts solides sous l'effet d'un chauffage, d'un refroidissement ou d'une réaction chimique.

En proposant d'appliquer les vibrations générées par le vibrateur mécanique, par l'intermédiaire d'une pièce de liaison entre le vibrateur mécanique et le conduit, dans lequel la pièce de liaison et de transmission des vibrations est fixée au voisinage d'un coude ou d'une extrémité d'un tronçon rectiligne de tube du conduit, on peut obtenir une telle pièce de liaison ou de transmission des vibrations qui soit relativement courte, et par conséquent de faibles dimensions ; grâce à ces faibles dimensions, on peut ainsi minimiser le diamètre de l'orifice de passage qui doit être prévu dans une paroi de l'enceinte thermique pour permettre à la pièce de liaison de s'étendre au travers de celui-ci, du vibrateur mécanique qui est disposé à l'extérieur de l'enceinte (par référence à cette paroi) jusqu'au conduit disposé à l'intérieur de l'enceinte (par référence à cette paroi).

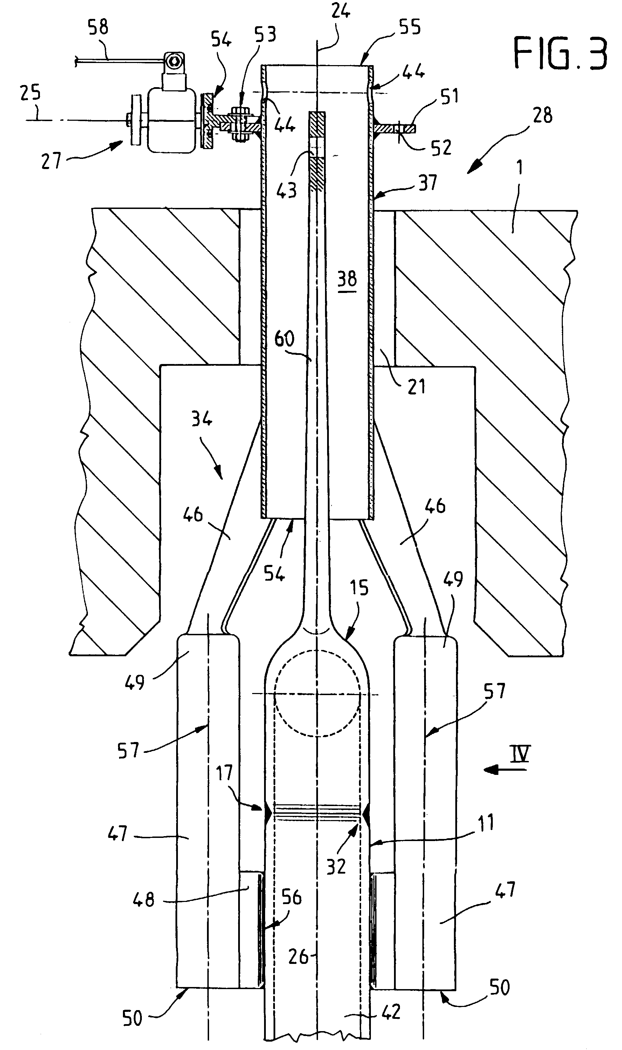

Grâce aux faibles dimensions de cette pièce (ou structure) de transmission des vibrations, ainsi que grâce au caractère inamovible de la liaison mécanique entre cette pièce de transmission des vibrations et le conduit, par exemple obtenu par soudure ou par moulage, on peut ainsi obtenir une liaison mécanique entre le vibrateur et le conduit à faire vibrer, qui soit dotée d'une grande raideur mécanique (statique et dynamique) et d'une pièce de transmission qui soit relativement légère ; à titre d'exemple, la masse de l'adaptateur illustré figures 3 à 5 peut être inférieure à 100 kilos, par exemple voisine de 50 kilos.

Ces avantages peuvent également être amplifiés en choisissant de constituer la pièce de transmission des vibrations par l'assemblage (soudure) de plusieurs pièces réalisées dans des matériaux différents, ce qui permet également d'adapter la conception de la pièce aux différentes températures auxquelles seront soumises les différentes parties de la pièce, à savoir un premier matériau spécialement adapté pour résister aux températures élevées régnant à l'intérieur de l'enceinte thermique, et un deuxième matériau pour la partie de la pièce disposée au voisinage de la paroi ou à l'extérieur de l'enceinte thermique, où les températures sont proches de la température ambiante normale.

Le choix préféré d'un vibrateur mécanique de type électromagnétique permet de proposer de tels vibrateurs dont le coût est très faible, qui sont très compacts, de faible masse, très robustes, permettant un fonctionnement en continu et capables d'appliquer au conduit par l'intermédiaire de la pièce de transmission, des efforts relativement importants, par exemple de l'ordre de quelques dizaines de newtons.

Dans ce type de vibrateur mécanique alimenté en courant alternatif avec polarisation par aimant permanent, la force fournie par le champ magnétique alternatif est utilisée pour produire un déplacement oscillatoire selon une direction donnée et la fréquence de travail (c'est-à-dire la fréquence des vibrations produites) est égale à la fréquence d'alimentation en énergie électrique, qui est de préférence réglable (ou variable) indépendamment en fréquence d'une part et en tension ou intensité d'autre part, en prévoyant d'alimenter ce vibrateur électromagnétique par un onduleur ou variateur.

En proposant d'appliquer une vibration résultant d'un effort dont le module est réglable, et de préférence dont la direction est également réglable, on permet d'obtenir une mise en vibration du conduit avec une amplitude nécessaire et suffisante pour diminuer ou éviter le dépôt de sous-produits sur les parois internes du tube ou conduit disposé dans l'enceinte thermique ; les moyens décrits ci-dessus permettent d'ajuster la fréquence d'excitation (ou de mise en vibration) du conduit en fonction des fréquences propres du tube (ou conduit) et de celles de la pièce de transmission des vibrations ; cette mise en vibration de manière réglable, tant en termes de module que de fréquence et de direction, est particulièrement favorisée par les caractéristiques de l'invention.

L'enceinte peut contenir un tube ou plusieurs tubes dotés d'une seule entrée et d'une sortie d'un fluide, c'est-à-dire d'une seule passe ; l'enceinte peut également contenir plusieurs jeux de plusieurs tubes, chacun doté d'une entrée individuelle ou commune à plusieurs tubes pour le fluide, chaque tube étant également doté d'une sortie de fluide individuelle ou commune à plusieurs tubes ; l'enceinte peut contenir de deux à quatre tubes conformés en serpentin, dotés d'une entrée individuelle pour chaque tube et d'une sortie individuelle ou commune à plusieurs tubes ; l'enceinte peut être chauffée par des brûleurs qui peuvent être disposés en partie inférieure (dans une zone parfois dénommée « sole ») et/ou le long d'un ou plusieurs côtés ; il est avantageux que les brûleurs soient disposés perpendiculairement à l'axe longitudinal des portions rectilignes de tube et/ou perpendiculairement à un plan contenant les axes longitudinaux de différentes sections rectilignes de tubes ; les brûleurs peuvent également être disposés de telle sorte que leur flamme s'étende selon des axes parallèles aux axes des portions rectilignes de tubes, l'axe des flammes étant colinéaire ou espacé des axes des portions rectilignes de tubes ; l'enceinte peut être constituée par un four de craquage, tel qu'un four de vapocraquage d'hydrocarbures, qui peuvent être gazeux à température ambiante ou liquides, tels que le naphta ; de tels produits et procédés de traitement thermique de craquage sont décrits dans la demande internationale WO 92/11931 qui est incorporée par la présente par référence ; l'enceinte peut également être utilisée comme échangeur de chaleur pour chauffer ou refroidir un fluide s'écoulant dans le conduit.

Le conduit peut comporter une ou plusieurs portions rectilignes, par exemple de deux à vingt portions rectilignes, qui sont raccordées en parallèle ou en série et séparées par au moins un coude qui peut être un quart de tour ou un coude à 180° ; les sections rectilignes de tube peuvent s'étendre parallèlement les unes aux autres ; dans ce cas, plusieurs (par exemple de deux à six) portions rectilignes peuvent être en partie au moins raccordées à un collecteur commun, qui peut être situé à l'extérieur, et de préférence à l'intérieur de l'enceinte.

De préférence, le conduit comporte au moins deux ou de préférence au moins trois et au plus vingt portions rectilignes de tubes, chacune séparée par un coude s'étendant sensiblement sur 180°, de sorte que le courant du fluide s'écoulant dans le conduit inverse sa direction à chaque coude par rapport à un référentiel fixe, tel qu'une cloison de l'enceinte ; le conduit a dans ce cas une forme préférée de serpentin ou de faisceau ; les portions rectilignes de tube peuvent être disposées horizontalement ou verticalement, et certaines portions peuvent être disposées verticalement, tandis que d'autres sont disposées horizontalement, qui sont plus courtes que les portions rectilignes disposées verticalement, le rapport de la longueur des sections courtes à la longueur des sections rectilignes longues, étant par exemple de l'ordre de 0,05 à 0,2 ; là où les portions rectilignes de tube et/ou les coudes peuvent avoir des diamètres différents ; de préférence, les portions rectilignes de tubes et les coudes ont un diamètre identique ; alternativement, le diamètre du tube peut varier le long de ce tube et/ou du conduit, d'une section d'entrée à une section de sortie, de manière progressive ou dégressive ; les portions rectilignes de tube peuvent avoir une longueur comprise entre 2 et 25 mètres, par exemple comprise entre 5 et 20 mètres.

Le connecteur ou adaptateur, c'est-à-dire la structure mécanique de transmission des vibrations produites par le vibrateur à la ou les sections rectilignes de tubes ou aux coudes du tube, est disposé entre le vibrateur et le conduit ; cette structure de transmission ou adaptateur est de préférence fixée ou bien fait partie intégrante d'une portion du conduit, et plus particulièrement fait partie intégrante d'une ou plusieurs sections rectilignes de tubes du conduit, s'étendant à moins d'un mètre ou deux d'un coude, bien que la structure de transmission puisse être fixée ou faire partie intégrante d'un coude du conduit ; le ou les connecteurs de transmission de vibrations peuvent être fixés au conduit en un seul point ou zone de fixation, mais de préférence, le dispositif est doté de plusieurs points ou zones de fixation, de préférence au moins deux, par exemple au plus six zones de fixation, par exemple disposées symétriquement autour du tube ou conduit ; la (ou les) zone(s) de fixation est (sont) espacée(s) (ou distante(s)) des soudures reliant entre elles deux portions de tube du conduit ; de préférence, l'adaptateur ou structure de transmission est fixé en une ou plusieurs zones de fixation à la portion rectiligne de tube, de part et d'autre d'un coude s'étendant sur 180°, particulièrement dans le cas d'un conduit comportant des portions rectilignes de tubes verticales ; chaque adaptateur ou structure de transmission de vibrations peut être connecté à un vibrateur respectif disposé à l'extérieur de l'enceinte et peut par conséquent s'étendre au travers d'un orifice respectivement prévu dans la paroi de l'enceinte pour chaque structure ou adaptateur de transmission de vibrations dans le cas où ces adaptateurs ou structures s'étendent à l'intérieur de l'enceinte ; alternativement, plusieurs adaptateurs de transmission de vibrations au conduit sont assemblés mécaniquement entre eux et à un ou plusieurs vibrateurs, pour réduire le nombre d'orifices nécessaires dans les parois de l'enceinte.

Les nombreux avantages procurés par l'invention seront mieux compris au travers de la description suivante qui se réfère aux dessins annexés, qui illustrent sans aucun caractère limitatif des modes préférentiels de réalisation de l'invention.

Sauf indication contraire, des repères numériques identiques dans les différentes figures, désignent des éléments identiques ou similaires.

La figure 1 illustre en vue schématique en coupe, par un plan par exemple vertical, d'un appareil de craquage thermique d'hydrocarbures comportant un four muni de brûleurs et équipé d'un système de mise en vibration du conduit conformé en serpentin, dans lequel circulent des hydrocarbures devant subir la réaction de craquage, conformément à l'invention.

La figure 2 illustre, de la même manière que la figure 1, une variante de réalisation des moyens de mise en vibration du conduit conformé en serpentin.

La figure 3 illustre un détail de réalisation des moyens de transmission de vibrations illustrés schématiquement à la figure 2.

La figure 4 est une vue selon IV de la figure 3.

La figure 5 illustre en vue en perspective schématique un adaptateur (c'est-à-dire la pièce ou structure de transmission des vibrations) similaire à celui des figures 3, 4 et 6.

La figure 6 est une vue en coupe par un plan transversal de la fixation de la structure de transmission à deux portions rectilignes (séparées par un coude à 180°) d'un conduit, et est une vue selon VI/VI de la figure 4.

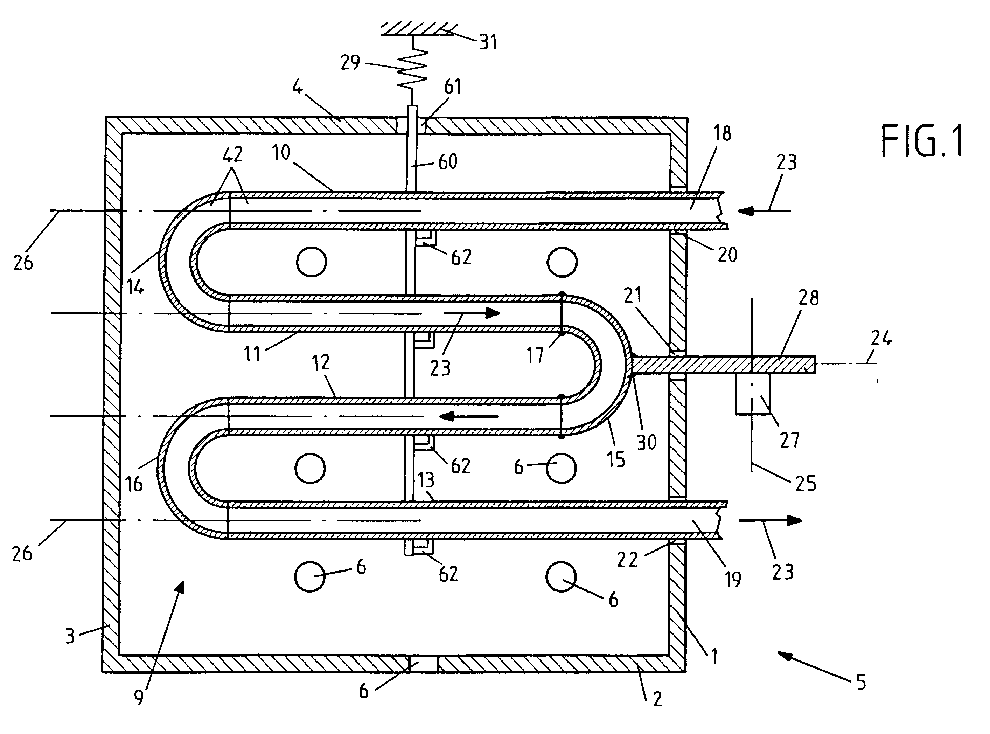

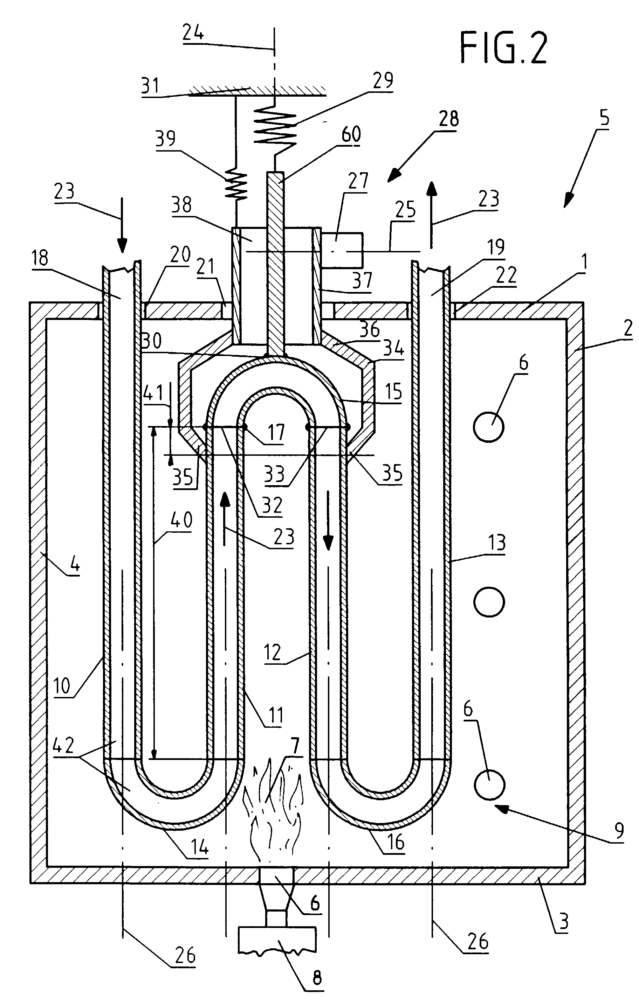

Par référence aux figures 1 et 2 particulièrement, l'enceinte thermique telle qu'un four de craquage d'hydrocarbures, est délimitée par quatre parois repérées 1, 2, 3, 4, délimitant cette enceinte 5.

A l'intérieur de l'enceinte 5 est disposé un conduit 9 en forme de serpentin délimitant un conduit 42, à l'intérieur duquel pénètrent par l'ouverture 18 et selon la flèche 23, les produits destinés à être soumis au traitement thermique à l'intérieur de l'enceinte 5, lesquels produits s'échappent après circulation selon les flèches 23, par l'orifice 19 de sortie du conduit 9 ; comme illustré sur les figures 1 et 2, le conduit 9 est essentiellement constitué par un serpentin constitué de quatre tronçons 10, 11, 12, 13 de tubes droits (rectilignes) qui sont assemblés entre eux par trois coudes 14, 15 et 16.

Les tronçons rectilignes de tubes 10 à 13 s'étendent selon des axes longitudinaux respectifs repérés 26, parallèles entre eux qui sont verticaux dans le mode de réalisation illustré aux figures 2 à 4 et qui sont horizontaux dans le mode de réalisation illustré à la figure 1.

Les parois délimitant l'enceinte 5 sont munies d'une pluralité d'orifices 6 ; sur la figure 2, on a représenté schématiquement un brûleur 8 disposé à l'extérieur de l'enceinte 5 dans l'alignement d'un orifice 6 et produisant à la sortie de l'orifice 6 (du côté intérieur par référence à la paroi 2) des flammes 7, qui chauffent par rayonnement notamment, l'intérieur de l'enceinte 5 et particulièrement le conduit 9 dans lequel circule le ou les produits devant subir le traitement thermique.

Le conduit 9 est réalisé dans un matériau tel qu'un acier spécialement choisi pour notamment résister aux températures élevées (par exemple de l'ordre de 500°C à 1 150°C et jusqu'à 1 500°C) régnant dans l'enceinte 5, afin de permettre de maintenir la température du (ou des) fluide(s) circulant dans le conduit à une température généralement comprise entre 250°C et 1100°C ; comme illustré schématiquement aux figures 1 à 4, les différents éléments (coudes et tronçons droits de tubes) constituant le conduit 9, sont assemblés entre eux par soudures, telles que celles représentées schématiquement et repérées 17, qui sont prévues à l'interface ou jonction entre les tronçons droits 11 et 12, et le coude 15 représenté figures 1 à 4.

Trois orifices 20, 21 et 22 sont prévus dans la paroi 1 de l'enceinte 5, qui permettent respectivement le passage au travers de cette paroi 1, du premier tronçon 10 rectiligne du conduit 9 (concernant l'orifice 20), du dispositif 28 de transmission des vibrations du vibrateur 27 au conduit 9 (pour ce qui concerne l'orifice 21), du dernier tronçon 13 rectiligne du conduit 9 (pour ce qui concerne le troisième orifice 22).

Comme illustré figure 2, un élément 60 allongé de support du conduit 9, tel qu'une tige ou un tube d'axe vertical 24, s'étend au travers dudit orifice 21 et est fixé rigidement de manière inamovible (par exemple soudé), par sa base ou partie inférieure 30, à la partie centrale et supérieure du coude 15 ; cette tige 60 permet le supportage et la suspension d'une partie du conduit par l'intermédiaire du coude 15, grâce à notamment une liaison souple 29 telle qu'un ressort ou moyen de suspension équivalent, reliant l'extrémité supérieure de la tige 60 à une pièce ou installation fixe 31 située à l'extérieur de l'enceinte 5.

Dans le mode de réalisation représenté figure 2, les efforts alternatifs ou vibrations générés par le vibrateur 27 selon l'axe 25 (radial) perpendiculaire et sécant avec l'axe 24, sont appliqués au conduit par l'intermédiaire d'un adaptateur 28 comportant un tronçon 37 de tube sur la périphérie duquel le vibrateur est fixé, dans une partie du tube 37 située à l'extérieur de l'enceinte 5 ; le tube 37 s'étend selon l'axe 24 vertical et délimite un espace 38, à l'intérieur duquel s'étend la tige 60 support du conduit.

Le tronçon de tube 37 de grande raideur s'étend au travers de l'orifice 21 prévu dans la paroi 1, et est prolongé à sa partie inférieure par des pattes ou ailes ou nervures 34, qui sont par exemple soudées par leur partie supérieure 36 à la base (repérée 54 figure 3) du tronçon de tube 37, et qui sont également soudées par leur partie inférieure 35 aux tronçons rectilignes de tubes 11 et 12, dans une zone de ceux-ci, proche de leurs extrémités respectives supérieures repérées 32 et 33, par lesquelles ces tronçons de tubes droits sont soudés au coude 15.

De préférence, la distance 41 mesurée entre l'extrémité 32, 33 supérieure des tronçons de tubes 11 et 12 et la zone de ces tronçons de tubes dans laquelle est fixée l'extrémité inférieure 35 des pattes 34 des moyens de transmission de vibrations, est inférieure au quart (de préférence inférieure au dixième) de la longueur 40 de ces tronçons rectilignes de tubes 11 et 12.

Comme illustré figure 2, les moyens 28 de transmission de vibrations du générateur 27 au conduit 9, qui comportent essentiellement ledit tronçon de tube 37 et lesdites pattes ou éléments allongés 34, peuvent être en outre reliés audit appareillage fixe externe 31, par un deuxième moyen de suspension souple 39, tel qu'un ressort par exemple.

Dans le mode de réalisation illustré figure 1, le vibrateur 27 est directement fixé à la partie du connecteur 28 qui s'étend à l'extérieur de l'enceinte 5, pour lui transmettre les vibrations générées par ce vibrateur 27, lesquelles vibrations sont transmises par le connecteur 28 au coude 15 et par conséquent au conduit 9, et particulièrement au tronçon rectiligne de tube dans lequel circule le produit devant subir le traitement thermique dans l'enceinte 5 ; les efforts alternatifs appliqués au connecteur par le vibrateur 27 sont dirigés selon un axe 25 s'étendant de préférence radialement par référence à l'axe 24 longitudinal du connecteur 28.

Dans ce mode de réalisation, le connecteur 28 est essentiellement constitué par une tige rigide permettant la transmission des vibrations produites par le vibrateur jusqu'au coude 15 du conduit ; ce conduit est fixé et soutenu à l'intérieur de l'enceinte 5 par des moyens de support qui comportent une tige 60 verticale s'étendant au travers d'un orifice 61 prévu dans la paroi 4 de l'enceinte ; la tige 60 est fixée à un élément de support 31 externe à l'enceinte, par sa partie supérieure et par l'intermédiaire d'une liaison mécanique 29 souple ; le long de la tige 60 et en partie inférieure de celle-ci, sont fixées quatre pattes 62 sur lesquelles reposent et/ou sont fixés les tronçons droits / horizontaux 10, 11, 12, 13 du conduit 9.

Par référence aux figures 3 à 5, la tige 60 faisant partie des moyens de suspension du conduit à un appareil fixe externe à l'enceinte thermique délimitée notamment par la paroi 1 et qui s'étend au travers de l'orifice 21 prévu dans cette paroi, fait partie intégrante du coude 15, et est par exemple obtenue par moulage de la pièce constituée par ce coude et cette tige ; la tige 60 est munie dans sa partie supérieure d'un orifice 43 permettant la fixation des moyens de suspension repérés 29 figures 1 et 2, et qui permettent la liaison mécanique entre l'extrémité de cette tige et l'appareillage 31 fixe externe à l'enceinte 5 ; le générateur de vibrations 27, de préférence constitué par un vibrateur électromagnétique, se présente sous la forme d'un boîtier qui est alimenté en courant alternatif à fréquence variable par un générateur électrique (non représenté) par un câble 58 d'alimentation, et est fixé par l'intermédiaire d'une bride 54 et d'un boulon 53, à une autre bride 51 soudée autour du tronçon de tube 37, dans la partie de celui-ci s'étendant à l'extérieur de l'enceinte, c'est-à-dire à l'extérieur de la paroi 1 délimitant celle-ci ; cette bride 51 est munie d'une pluralité d'orifices 52 permettant la fixation du vibrateur 27 par les boulons 53, qui sont répartis sur le pourtour de la bride 51, de manière à permettre de choisir la direction de l'axe 25 sensiblement radial et perpendiculaire à l'axe 24, selon laquelle les vibrations ou efforts alternatifs seront exercés par le vibrateur 27 sur le tronçon de tube 37.

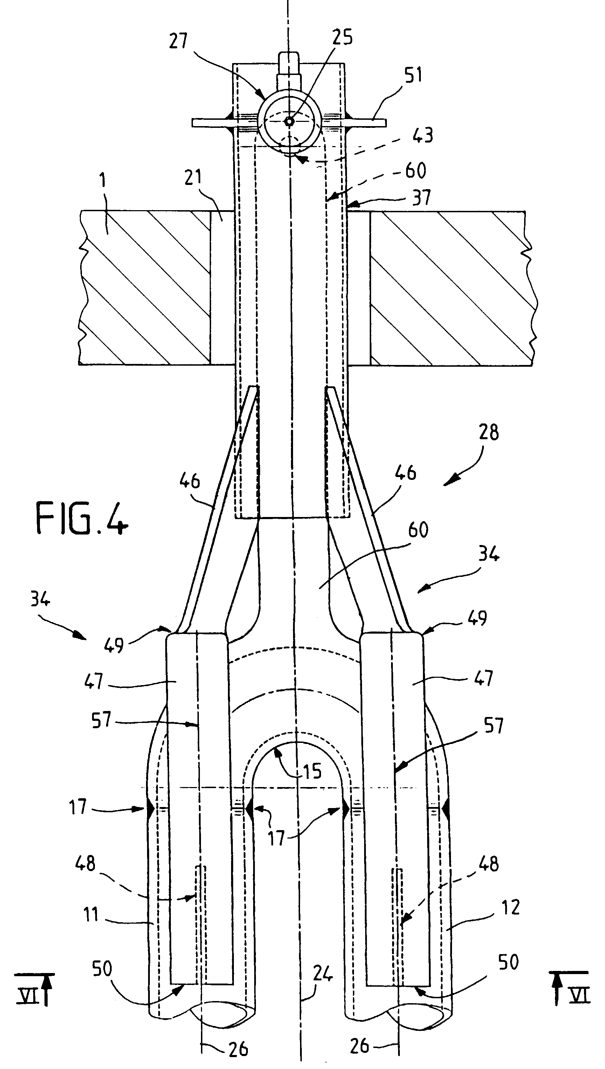

Ce tronçon de tube 37 qui s'étend au travers de l'orifice 21 et à l'intérieur duquel s'étend la tige 60, est prolongé dans sa partie inférieure, comme décrit précédemment en relation avec la figure 2, par des éléments allongés 34, qui, dans le cas des figures 3 et 4, sont au nombre de quatre, et sont répartis sensiblement symétriquement par rapport à deux plans respectivement perpendiculaires aux plans des figures 3 et 4, et passant par l'axe 24 selon lequel s'étend la tige-support 60 ; chacun des éléments allongés comporte, dans le mode de réalisation des figures 3 à 6, une plaque 46 dont l'extrémité supérieure est soudée à la partie inférieure 54 du tronçon de tube 37, et dont l'extrémité inférieure est soudée à l'extrémité supérieure 49 d'un tronçon de tube respectif 47, à l'extrémité inférieure de chacun desquels est prévu une autre plaque 48, dont un bord longitudinal 56 qui s'étend selon une génératrice des tronçons de tubes 11 et 12 du conduit, est soudé à ce tronçon de tube le long dudit bord 56 des plaques 48.

On voit qu'ainsi, les éléments allongés 34 sont soudés au voisinage de l'extrémité supérieure des tronçons de tubes 11 et 12, c'est-à-dire au voisinage des soudures 17 de liaison entre les tronçons de tubes 11 et 12 et le coude 15 reliant ces deux tronçons de tubes 11 et 12.

Les tronçons de tubes 47 faisant partie des éléments allongés de liaison 34 de la structure de transmission des vibrations du vibrateur 27 au conduit, s'étendent selon des axes longitudinaux 57 parallèles entre eux et à l'axe 24 selon lequel s'étend le tronçon de tube 37, ainsi que la tige 60 de suspension du coude 15 ; la partie supérieure du tronçon de tube 37 comporte des orifices radiaux 44 au voisinage de son extrémité supérieure 55, permettant la fixation à cette extrémité 55, de moyens de suspension tels que repérés 39 sur la figure 2.

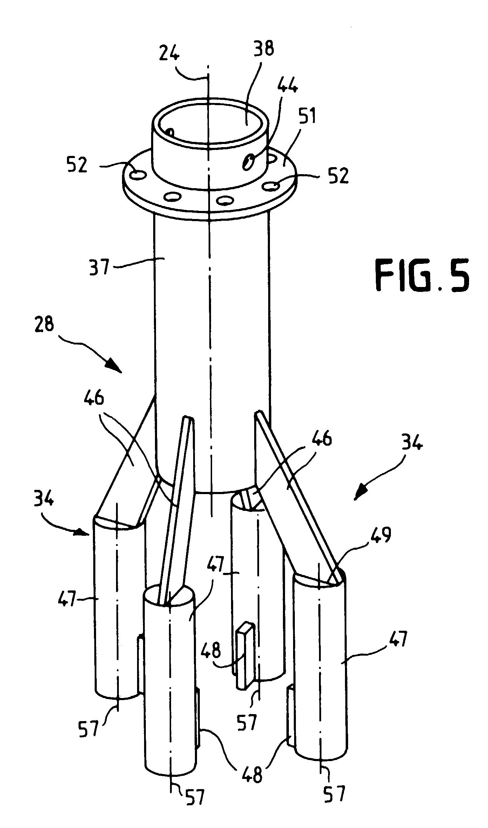

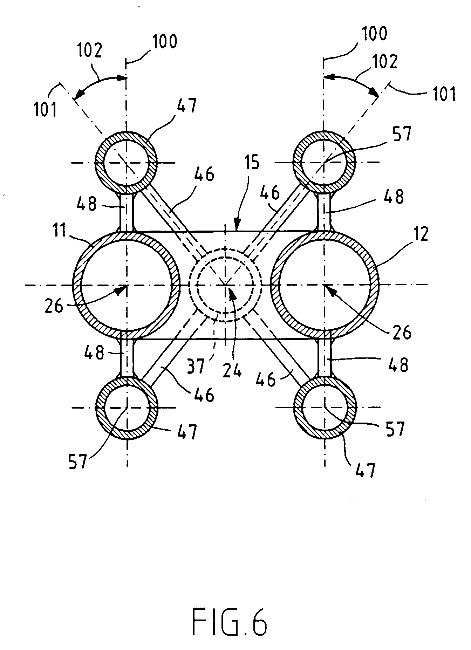

Une structure 28 de transmission peut comporter de deux à six (par exemple quatre, comme illustré figures 5 et 6) bras de liaison (ou éléments allongés) 34, qui sont de préférence disposés symétriquement ; chaque élément allongé (ou bras de liaison) 34 et/ou ladite structure peut comporter une patte ou oreille ou bride s'étendant en partie au moins autour de celle-ci et à laquelle est attaché le vibrateur ; selon un mode préférentiel de réalisation, cette structure peut être constituée par un simple tronçon de tube creux ou bague 37 qui s'étend au travers d'un orifice prévu dans une paroi de l'enceinte et à l'intérieur de laquelle s'étend un support du conduit, qui est espacé de la structure 28, 37.

Les éléments allongés 34 reliant la bague 37 au conduit peuvent être d'épaisseur sensiblement constante, par exemple en forme de bras incurvés ; de préférence, chaque élément allongé 34 de liaison comporte une première plaque ou ailette 46, reliant la bague 37 à un tronçon de tube creux ou de tige 47, qui est lui-même fixé au conduit à faire vibrer par une deuxième plaque ou ailette 48 respective ; dans le cas où le conduit comporte des portions verticales de tube, ladite première ailette 46 est disposée en partie supérieure du tronçon 47 et la deuxième ailette est disposée en partie inférieure du tronçon 47, comme illustré figure 5.

De préférence, comme illustré figure 5, les parties internes des plaques ou ailettes 46, 48, font face à la bague 37, en s'étendant à l'extérieur d'un cylindre formant une enveloppe de la bague 37.

Alternativement, les ailettes supérieures 46 peuvent faire face à la bague 37 par leur partie externe, et s'étendre à l'intérieur d'un cylindre (fictif) enveloppant la bague.

La direction de fixation des deuxièmes ailettes 48 à la partie rectiligne du conduit, de part et d'autre d'un coude du conduit, peut être parallèle à (ou de préférence transversale par rapport à) l'axe longitudinal de la partie rectiligne du conduit, et le cas échéant au plan contenant les axes de plusieurs portions rectilignes du conduit.

La direction 101 (figure 6) de fixation des ailettes supérieures 46 à la bague 37 peut être confondue ou parallèle à la direction 100 de fixation des ailettes inférieures 48 au conduit 11, 12, mais, de préférence, les directions 100 de fixation de toutes les ailettes supérieures sont différentes de l'une quelconque des directions 101 de fixation des ailettes inférieures, et séparées d'un angle 102, comme illustré figure 6.

De telles réalisations des moyens de transmission des vibrations au conduit, dans des zones d'application des vibrations disposées de part et d'autre d'un coude, et incorporant lesdites premières et deuxièmes plaques ou ailettes, permettent d'obtenir une structure dont la masse est faible mais dont la raideur est suffisamment élevée pour que la fréquence du premier mode propre de déformation soit supérieur à (par exemple supérieur au double de) la fréquence d'excitation du conduit par le vibrateur.

L'onduleur d'alimentation du vibrateur peut être choisi parmi ceux proposés par la Société TELEMECANIQUE (France).

Dans un exemple de réalisation de l'adaptateur 28 représenté figures 3 à 5 :
- les quatre éléments allongés 34 sont identiques et sont chacun constitué par un tronçon 47 de tube de 80 mm de diamètre extérieur, de 6 mm d'épaisseur et de 450 mm (millimètres) de long et par une plaque 46 de 12 mm d'épaisseur ;
- le tronçon de tube 37 a un diamètre extérieur de 145 mm, une épaisseur de 6 mm et une longueur de 580 mm.

La structure métallique de l'adaptateur (constitué par l'assemblage par soudure de ces pièces) a une longueur voisine de 1 200 mm et une masse qui, cumulée à celle du vibrateur, est voisine de 55 kilos.

## Revendications

1. Procédé de traitement thermique d'un ou plusieurs fluides s'écoulant dans un conduit (9) qui comporte au moins un tronçon rectiligne de tube dirigé selon un axe longitudinal et éventuellement terminé par au moins un coude et qui est disposé en partie au moins dans une enceinte thermique, pour réduire ou éviter un dépôt de particules solides sur la paroi interne dudit conduit, procédé dans lequel on provoque une vibration dudit conduit à l'aide d'un vibrateur (27) mécanique qui est disposé à l'extérieur de l'enceinte thermique (5), et qui est relié au conduit par un moyen de liaison mécanique, caractérisé en ce que ledit vibrateur exerce sur ledit moyen de liaison mécanique un effort selon un axe sensiblement transversal à l'axe longitudinal dudit tronçon rectiligne, et en ce que ledit moyen de liaison mécanique est fixé au voisinage d'une extrémité dudit tronçon rectiligne ou audit coude.

2. Procédé selon la revendication 1, dans lequel ledit vibrateur exerce un effort sensiblement radial sur ladite liaison mécanique.

3. Procédé selon l'une quelconque des revendications 1 ou 2, dans lequel on utilise un vibrateur qui est supporté par ladite liaison mécanique.

4. Procédé selon l'une quelconque des revendications 1 à 3, dans lequel ledit vibrateur exerce un effort périodique dont la fréquence est sensiblement égale à une fréquence propre correspondant à un mode de vibration transversale dudit tronçon rectiligne.

5. Procédé selon l'une quelconque des revendications 1 à 4, dans lequel on utilise un vibrateur électromagnétique alimenté par une source d'énergie électrique à fréquence variable.

6. Procédé selon l'une quelconque des revendications 1 à 5, dans lequel on applique des vibrations audit conduit à une fréquence inférieure à 1000 hertz, de préférence comprise entre 10 et 100 hertz.

7. Procédé selon l'une quelconque des revendications 1 à 6, dans lequel ledit (ou lesdits) fluide(s) est (sont) un (des) réactif(s) chimique(s) soumis à une réaction chimique dans ledit conduit.

8. Dispositif de traitement thermique d'un ou plusieurs fluides qui comporte :
- une enceinte thermique (5),
- un conduit (9) dans lequel ledit ou lesdits fluides s'écoulent, qui comporte au moins un tronçon (10,11,12,13) rectiligne dirigé selon un axe longitudinal et éventuellement terminé par au moins un coude, et qui s'étend en partie au moins à l'intérieur de ladite enceinte,
- un vibrateur (27) mécanique disposé à l'extérieur de l'enceinte thermique,
- un moyen (28) de liaison mécanique reliant ledit conduit audit vibrateur,
caractérisé en ce que ledit moyen de liaison mécanique est fixé audit conduit au voisinage d'une extrémité dudit tronçon rectiligne ou audit coude, et en ce que l'axe (25) selon lequel ledit vibrateur exerce son effort sur ledit moyen de liaison mécanique est disposé sensiblement transversalement à l'axe longitudinal dudit tronçon rectiligne.

9. Dispositif selon la revendication 8, dans lequel ledit vibrateur est fixé audit moyen de liaison, de sorte que son axe (25) principal d'application d'effort soit disposé sensiblement radialement par référence à l'axe longitudinal (24) de la liaison mécanique.

10. Dispositif selon la revendication 8 ou 9, dans lequel au moins un moyen de support ou de guidage mécanique dudit conduit est disposé au voisinage de ladite extrémité du tronçon rectiligne du tube ou audit coude d'une façon distincte dudit moyen de liaison mécanique.

11. Dispositif selon l'une quelconque des revendications 8 à 10, dans lequel ledit moyen de liaison mécanique est fixé rigidement et de manière inamovible audit conduit, et ledit vibrateur est fixé rigidement audit moyen de liaison mécanique, et est de préférence supporté par celui-ci.

12. Dispositif selon la revendication 11, dans lequel une partie dudit moyen de liaison mécanique est soudée audit conduit, ou bien est moulée avec une partie dudit conduit.

13. Dispositif selon l'une quelconque des revendications 8 à 12, dans lequel ledit moyen de liaison mécanique comporte au moins deux éléments (34) allongés qui sont fixés au voisinage d'une extrémité dudit tronçon rectiligne ou audit coude.

14. Dispositif selon la revendication 13, dans lequel ledit moyen de liaison mécanique comporte une partie (37) tubulaire droite, qui est prolongée par lesdits éléments (34) allongés.

15. Dispositif selon l'une quelconque des revendications 8 à 14, dans lequel ledit moyen de liaison mécanique comporte un ensemble de pièces (34, 37) soudées entre elles, dont au moins deux pièces sont constituées de matériaux différents.

16. Dispositif selon l'une quelconque des revendications 8 à 15, dans lequel ledit vibrateur est un vibrateur électromagnétique qui est alimenté par un variateur de fréquence et de tension.

17. Dispositif selon l'une quelconque des revendications 8 à 16, dans lequel ledit vibrateur mécanique est fixé audit moyen de liaison mécanique par des moyens d'orientation qui permettent une orientation de l'axe (25) d'application de la vibration et/ou de l'effort alternatif généré par le vibrateur mécanique, autour d'un axe (24, 26) parallèle audit tronçon rectiligne de tube.

18. Dispositif selon l'une quelconque des revendications 8 à 17, dans lequel ledit moyen (28) de liaison mécanique est essentiellement constitué par une tige s'étendant au travers d'un orifice (21) prévu dans une paroi (1) faisant partie des moyens délimitant l'enceinte thermique, lequel moyen de liaison (28) est fixé à un coude disposé à une extrémité du tronçon rectiligne de tube, et dans lequel ledit tronçon rectiligne de tube s'étend sensiblement horizontalement.

19. Dispositif selon l'une quelconque des revendications 8 à 17, dans lequel ledit moyen (28) de liaison mécanique comporte une partie (37) tubulaire droite délimitant un espace tubulaire (38) à l'intérieur duquel s'étend une tige (27) faisant partie des moyens de support ou de guidage mécanique du conduit (9), laquelle partie tubulaire (37) s'étend au travers d'un orifice (21) prévu dans une paroi (1) de l'enceinte thermique, et dans lequel ledit tronçon rectiligne de tube s'étend sensiblement verticalement.

20. Dispositif pour appliquer des vibrations produites par un vibrateur mécanique à un conduit dont au moins une partie s'étend à l'intérieur d'une enceinte thermique et qui comporte au moins un tronçon rectiligne de tube dirigé selon un axe longitudinal et éventuellement terminé par au moins un coude, lequel dispositif comporte un moyen (28) de liaison mécanique reliant le vibrateur au conduit et ayant une structure métallique de transmission des vibrations qui est de forme allongée selon un axe (24) et qui comporte :
- un tronçon (28, 37) tubulaire ou bien plusieurs tronçons tubulaires (37, 47) assemblés de manière rigide,
- une interface de fixation mécanique rigide dudit vibrateur sur ladite structure métallique,
- une interface de fixation mécanique rigide de ladite structure métallique sur ledit conduit.

21. Procédé de mise en vibration d'un conduit dans lequel s'écoulent un ou plusieurs réactifs chimiques, pour réduire ou éviter un dépôt de particules solides sur la paroi interne du conduit dans lequel on utilise un dispositif suivant la revendication 20.
